# EUROPEAN PATENT SPECIFICATION

(11) **EP 0 588 776 B1**
(45) Date of publication and mention of the grant of the patent: **26.07.1995**
(21) Application number: 93850177.2
(22) Date of filing: 15.09.1993
(51) Int. Cl.: G01L 5/00

(54) **Method and device for measurement of the nip force and/or of the nip pressure in a nip formed by a revolving roll or by a band employed in the manufacture of paper**
Verfahren und Vorrichtung zum Messen der Kraft und/oder des Druckes in einem Spalt gebildet durch eine sich drehende Walze oder durch ein Band bei der Papierherstellung
Procédé et dispositif pour mesurer la force et/ou la pression dans un interstice formé par un rouleau tournant ou d'un ruban utilisé dans la production du papier

(30) Priority: 16.09.1992 FI 924138
(43) Date of publication of application: 23.03.1994
(73) Proprietor: VALMET PAPER MACHINERY INC., 00620 Helsinki (FI)
(72) Inventor: Allonen, Harri, SF-40520 Jyväskylä (FI)
(74) Representative: Rostovanyi, Peter

(56) References cited:
- EP-A- 0 219 149
- EP-A- 0 538 221
- WO-A-91/13337
- GB-A- 2 146 774
- US-A- 4 242 666
- PATENT ABSTRACTS OF JAPAN vol. 12, no. 2 (P-652)(2849) 7 January 1988; JP-A-62 165 135

## Description

The invention concerns a method for measurement of the nip force and/or of the nip pressure in a nip formed by a revolving roll or by a corresponding band employed in the manufacture of paper, in which method a series of measurement detectors is employed, whose detectors are placed over a certain width in the transverse direction of the revolving roll or of the band, preferably over the entire width of the paper web, the measurement signals obtained from said detectors being passed to a measurement amplifier unit, whose connectors are controlled so that, through the measurement amplifier unit, the signal of each measurement detector is passed to a telemeter transmitter placed in connection with the revolving roll or equivalent, the telemetric messages transmitted by said telemeter transmitter wirelessly being received by means of a telemeter receiver placed outside the revolving roll or equivalent.

Also, the invention concerns a device for measurement of the nip force and/or of the nip pressure and of the distribution of same in a nip formed by a revolving roll or by a corresponding band employed in the manufacture of paper, which device comprises a series of detectors placed in connection with the revolving roll or the band, which measurement detectors are placed, preferably as uniformly spaced, in the transverse direction of the roll or the band, which device comprises a telemeter transmitter fitted in connection with the revolving roll or the band, to which transmitter the signals obtained from the different measurement detectors can be passed, and which device comprises a telemeter receiver fitted at the proximity of the telemeter transmitter outside the roll or equivalent, said receiver being fitted to receive the measurement signals transmitted by the telemeter transmitter wirelessly.

In a number of different stages in the manufacture of paper, various nips are used through which the paper web is passed. Examples of such nips are roll nips and so-called extended nips in the dewatering press of a paper machine, calendering nips, and nips in paper winders. For example, the distribution of the nip pressure in a dewatering press in the transverse direction (in the direction of the axes of the nip rolls) affects the transverse moisture profile of the web that is pressed.

It is known in prior art to use adjustable-crown rolls or so-called Küsters rolls as press rolls, in which rolls the transverse distribution of the linear load in the press nip can be controlled by means of hydraulic loading members. These members are, as a rule, regulated on the basis of regulation signals given by moisture and/or grammage detectors. However, in view of overall control and regulation of the process, it would be extremely important also to know the factual values and distributions of the nip pressure both in the transverse direction and in the machine direction. A further piece of information that is important for the control of the nip process is the width of the nip in the direction of running of the web, i.e. in the machine direction, said information permitting an optimization of the pressing process. This information is also significant for the regulation of the nips in calenders and winders. As an example of the system of regulation of press nips, reference is made to the applicant's FI Patent No. 76,872 (corresp. US Pat. 4,791,863), the system of measurement in accordance with the present invention being usable, for example, in an environment similar to that described in said cited patent.

In recent years, various so-called extended-nip presses have been introduced and taken to use, which are based on press shoes and/or on press belts and in which the width of the press zone in the machine direction is substantially larger than in the roll nips proper. Also in the case of extended-nip presses, the distribution of the nip pressure in the shoe and/or band nips both in the machine direction and in the transverse direction is an important parameter in view of the control of the pressing process. As one example of said extended-nip presses, reference is made to the applicant's FI Patent No. 82,092 (corresp. US Pat. 5,043,046).

In prior art, various drum reel-ups are known, in which belt support units have also been employed in addition to carrier drums. In view of the reeling of the paper web, it is also important to know the values and distributions of the nip pressure both in the machine direction and in the transverse direction. As examples of those reel-ups developed by the applicant in whose connection the method and the device of the present invention can be used, reference is made to the applicant's FI Patents Nos. 81,768 and 81,770 (corresp. US Pats. 4,921,183 and 4,883,233).

The distribution of the nip force in the machine direction and in the transverse direction, which is important in view of the regulation and control of the paper manufacture process, has been practically almost impossible to measure by means of the prior-art methods and apparatuses during production operation. Measurement of nip forces from a revolving roll has been carried out under laboratory conditions, in which respect reference is made to an article in the journal Paperi ja Puu - Paper and Timber 73 (1991):5, J. Koriseva, T. Kiema, and M. Tervonen: "Soft Calender Nip: An Interesting Subject for Research and Measurement". In the method described in said paper, a number of detectors have been installed on a roll, each of which detectors requires a telemetric equipment of its own and amplifiers of its own. Since the weight of the measurement system consists primarily of the weight of the telemetric equipment (about 1 kilogram per channel), this, together with the high costs, imposes a limitation on the number of the measurement channels and detectors in a factual roll in a paper machine or paper finishing machine. Moreover, owing to the scarce space, it is, in practice, very difficult to fit a number of telemetric equipments on a revolving roll in a paper machine or paper finishing machine without alterations in the construction.

Moreover, in respect of the prior art related to the present invention, reference is made to the published International Patent Application WO 91/13337 (Beloit Corp.).

In the prior-art methods and devices for measurement of nip forces, further problems have consisted of the calibration of the detectors as well as of the transfer of the signal from the revolving roll. In the way known from prior art, for the transfer of the signal, glide rings and equivalent arrangements have been used, and also telemetric equipments, which are, however, complicated and susceptible of disturbance.

In view of elimination of the drawbacks stated above, in the applicant's FI Patent Application No. 914829 (Published Pat. Appl. No. 86,771) corresp. EP-A-538 221, such a method and a device closely related to the present invention are described in which the measurement signals received from the different detectors are passed to a switching unit, whose connectors are controlled, based on the rotation of the roll or equivalent, by means of a pulse generator or equivalent so that, through the switching unit, the signal of each measurement detector is alternatingly connected to a telemeter transmitter placed in connection with the revolving roll or equivalent, and, by means of the telemeter transmitter, the series of measurement signals are transmitted wirelessly to a stationary telemeter receiver placed outside the revolving roll or equivalent.

The object of the invention of the FI patent application mentioned above has been to provide a method and a device for measurement of the nip forces and/or of the nip pressures and of distributions of same in roll and/or band nips employed in the manufacture of paper so that the drawbacks discussed above can be substantially avoided, which method and device of measurement is suitable for on-line measurement of nip forces and/or pressures during production operation, and in which method and device the transfer of the signals from the revolving roll has been solved more simply and more economically so that the method is suitable for a papermaking environment, which is quite demanding in this respect, and in which method and device the problems related to the location of the detectors on the nip roll or nip band are solved.

The primary object of the present invention is further development of the method and device suggested in the applicant's said FI patent application so that the construction of the device, in particular the embodiment of its electronic system, is simpler and easier and more versatile to operate and to carry into effect.

It is a further object of the invention to provide such a system of measurement of the sort concerned as can be controlled in a simple way from outside the revolving roll so that, in the system, measurement data and, if necessary, also calibration data can be fed from outside the roll into the measurement system and measurement data can be transferred from the roll wirelessly to an outside system, which can be favourably provided with various processing and computing programs for the measurement data.

In view of achieving the objectives stated above and those that will come out later, the method of the invention is mainly characterized in that the revolving roll or equivalent is provided with a transmitter/receiver, that a transmitter receiver placed outside the roll or equivalent is placed at the proximity of said transmitter/receiver, said transmitter receiver being connected to a PC or to a corresponding logic unit, and between said transmitter/receivers, a two-way wireless telemetric connection is arranged, through which measurement data are transferred from the roll or equivalent to said PC or equivalent, and from the latter unit, control data for the measurement system and possible calibration data are transferred to the measurement system placed in connection with the roll or equivalent.

On the other hand, the device in accordance with the invention is mainly characterized in that the device comprises a transmitter/receiver placed on the revolving roll or equivalent and a transmitter/receiver arranged outside the roll or equivalent at its proximity and a PC or a corresponding logic unit connected to said transmitter/receiver, and that a two-way telemetric connection is arranged between said transmitter/receivers so that control data for the measurement system can be transferred from said PC or equivalent to the measurement amplifier unit of the roll and that measurement data can be transferred from said detectors to said PC or equivalent for use, for producing the output, and/or for further processing.

In the present invention, the control of the measurement device and the control of the whole measurement process has been transferred to a PC or an equivalent logic unit connected to a telemeter transmitter/receiver placed outside the roll subjected to the nip-pressure measurement. In this PC, a program is stored, which is preferably divided into a measurement-cycle branch and a calibration branch. In the PC, the operator can choose either the measurement cycle or the calibration cycle, or said choice may also be carried out automatically.

The roll to be measured is preferably provided with PVDF film detectors, which are connected to a measurement amplifier unit. The measurement amplifier unit comprises a charge amplifier, a switching unit, an A/D converter, and a telemeter transmitter/receiver. The wireless telemetric communication between the measurement amplifier unit and the telemeter transmitter/receiver, which is placed outside the roll and is connected to the PC, takes place digitally.

In a preferred embodiment of the invention, the power supply to the measurement amplifier unit placed in connection with the roll is accomplished by means of the induction principle, so that the size of the measurement unit can be minimized, which is of great importance in the application concerned.

In the following, the invention will be described in detail with reference to some exemplifying embodiments of the invention illustrated in the accompanying drawing, the invention being not confined to the details of said embodiments.

Figure 1 is a schematic illustration of a press nip in which the invention can be applied.

Figure 2 is a schematic illustration of the distribution of the compression pressure in the machine direction in a press nip as shown in Fig. 1.

Figure 3 is a schematic illustration of the distribution of the compression pressure in the transverse direction.

Figure 4 is a schematic illustration, partly as a block diagram, of the main principle of the measurement arrangement in accordance with the invention.

Figure 5 is an axial sectional view of a press roll provided with an elastic coating and provided with measurement detectors in accordance with the invention.

Figure 6 is a sectional view of a detector made of a piezoelectric PVDF film.

Figure 7 illustrates a metallizing pattern of PVDF film detectors.

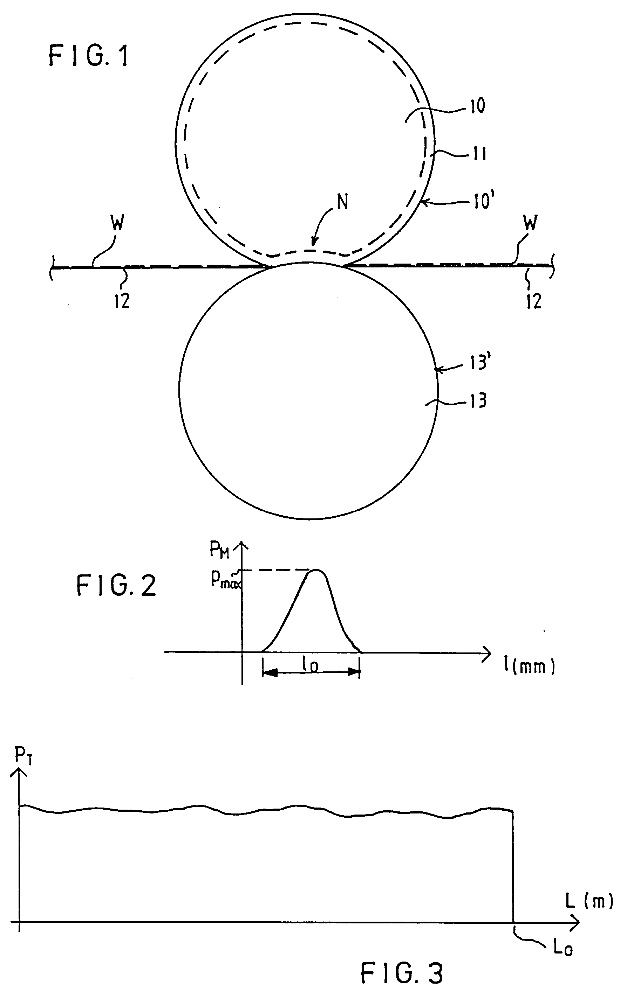

Fig. 1 is a schematic illustration of a press nip N in a dewatering press, which nip is formed between the rolls 10 and 13. The web W that is dewatered is passed into the nip N on a press felt 12. The upper roll 10 has an elastic coating 11, which has a smooth outer face 10′. The lower roll 13 has a hollow face 13′, into which water can be removed out of the press felt 12.

Fig. 2 is a schematic illustration of the distribution of the compression pressure p_{M} in the press nip N in the machine direction 1. The compression pressure p_{M} has a peak value pₘₐₓ. The nip N as shown in Fig. 1 may also represent a calendering nip, in which case, of course, no press felt 12 is used and in which case, for example, the roll 13 is a hard-faced roll and the roll 10 is a calendering roll provided with a soft coating, such as a polyurethane coating 11, so that the nip N is a so-called soft calendering nip.

Fig. 3 illustrates the distribution of the compression pressure p_{T} of the nip N in the transverse direction, i.e. in the axial direction of the rolls 10 and 13. The transverse width of the paper web W and of the nip N is denoted with L₀.

The transverse distribution of the compression pressure p_{T} affects the dry solids content of the web in dewatering presses, the caliper and smoothness of the web in calendering nips, and the uniformity and the hardness profile of the roll in reeling nips. These are important process parameters, so that the distributions p_{M} and p_{T} of the nip forces and nip pressures are parameters important in view of the regulation and control of the papermaking process.

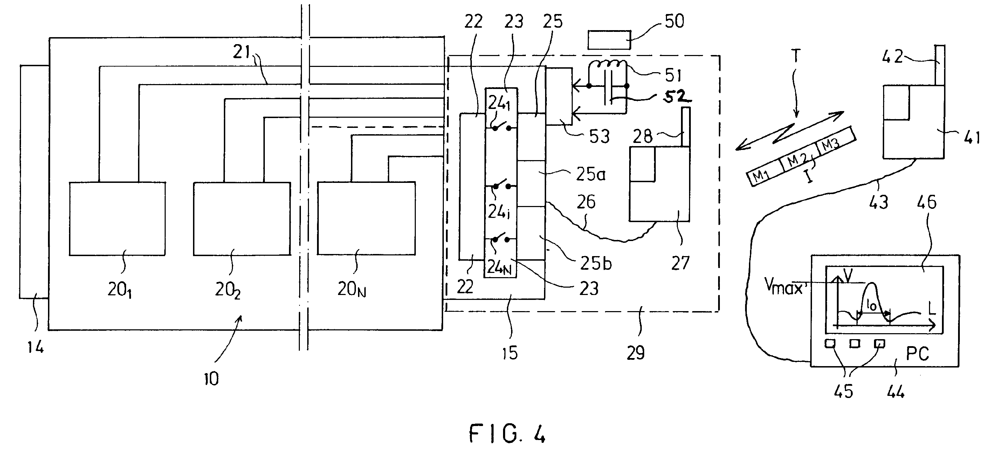

Fig. 4 is a schematic illustration of the main principles of the arrangement of measurement in accordance with the invention. In the roll 10, which forms the press nip N and which is provided with an elastic, e.g., polyurethane coating 11, inside the coating 11, a series 20 of measurement detectors 20₁...20ₙ is fitted, whose number is, thus, n pcs. By means of the series of detectors 20, it is possible to measure both the distribution p_{M} of the nip pressure in the machine direction and the distribution p_{T} of the nip pressure in the transverse direction, the latter at n points in the transverse direction. The detectors 20₁...20ₙ are preferably uniformly spaced, and their number is, as a rule, n = 3...20 pcs. The detectors 20 can be fixed either directly to the roll 10 body or inside the coating 11, e.g. between its layers, or, in some exceptional cases, directly onto the outer face of the roll.

From the detectors 20i, the signals are passed along insulated cables to the measurement amplifier unit 29, which contains a charge amplifier 22, a switching unit 23, a processor 25, an A/D converter 25a, a buffer memory 25b, and a transmitter/receiver unit 27. The switching unit 23, which is, e.g., a CMOS-logic, is controlled from outside the roll 10 by means of a separate PC 44 so that, always when a command arrives from the PC 44 at the processor 25, a connector 24i that was closed is opened and a certain connector 24ᵢ₊₁ that was open is closed. In this way, the detectors 20i are read alternatingly, in which case only one telemetric measurement channel T is needed.

The detectors 20i can be read either manually, in which case the operator determines which connector 24i is open/closed at each particular time, or automatically, in which case it is determined under control by a program stored in the PC 44 which connector 24i is open/closed at each particular time.

Since there is only one measurement channel T in use, the system is sufficiently simple and the size and quantity of electronics at the end 15 of the roll 10 has been minimized, which is highly important in the application concerned.

The two-way telemetric communication between the PC 44 and the measurement amplifier unit 29 is carried out wirelessly in digital form. The digital transfer of data, as compared with analogical transfer, is advantageous, because detrimental interference in the signal level is little and the consumption of power is less, and no expensive hardware cost is involved at the side of the PC 44.

The processor 25 of the measurement amplifier unit 29 is connected with an A/D converter 25a and, if necessary, with a buffer memory 25b, in which the measurement data obtained from the detectors 20i can be collected, the detectors 20i being calibrated on the basis of said measurement data by means of a calibration program stored in the PC 44. The processor 25, the related A/D converter 25a, and the buffer memory 25b, if any, are connected via a RS232 bus 26 to a transmitter/receiver 27, which has a transmitter/receiver antenna 28. The transmitter/receiver 27 and its antenna 28 are placed in connection with the roll 10. The transmitter/receiver 27,28 is in wireless telemetric connection T with a transmitter/receiver 41 placed at the proximity of the roll, outside the roll, which transmitter/receiver 41 is provided with a transmitter/receiver antenna 42. The telemetric connection T takes place digitally so that the measurement data M₁,M₂,M₃,Mᵢ,...Mₙ of each detector 20i are transferred successively as suitable packages I. The telemetric connection T is a two-way connection, so that from the PC 44, which is connected to the transmitter/receiver 41,42 via a cable 43, it is possible to give commands to the measurement amplifier unit 29 through its receiver 27.

Fig. 4 schematically shows the keyboard 45 of the PC 44, its display screen 46, which shows the distribution V(l) of the nip pressure, wherein Vₘₐₓ represents the peak voltage of the detectors 20 and lₒ represents the length of the nip in the machine direction, i.e. in the running direction of the paper web.

In its simplest form, the supply of electricity to the measurement amplifier unit can be accomplished as battery operated. In practice, the power supply is preferably accomplished by means of a generator, which consists of a permanent magnet 50 installed as stationary at the proximity of the roll and of an induction coil 51 and a capacitance 52 installed in connection with the measurement amplifier unit 29, the electric charge produced being stored in said capacitance 52. When the measurement amplifier unit revolves along with the roll 10, the magnetic field produced by the permanent magnet 50 induces an electromotive force in the induction coil 51, by means of which force the capacitance 52 is charged further, said capacitance feeding the necessary voltage through a regulator 53 to the measurement amplifier unit 29. Thus, when the roll 10 revolves, the measurement amplifier unit 29 and the transmitter/receiver 27 constantly receive their necessary operating electricity.

The force or pressure detectors 20 used in the invention are preferably made of PVDF film (PVDF = polyvinylidenedifluoride), which is a piezoelectric film. Regarding the properties and functioning of this film, reference is made to the article in the journal Prosessori 13/88, J. Koriseva: "Pietsosähköinen vaihtoehto" (Piezoelectric alternative). Suitable for the purposes of the invention are, e.g., the PVDF films sold under the trade marks "SOLEF" and "KYNAR", whose thicknesses vary in the range of 8...40 »m. A PVDF film is well suitable for a force or pressure detector, especially because, by its means, a force of just tens of N already provides an output voltage of the volt level.

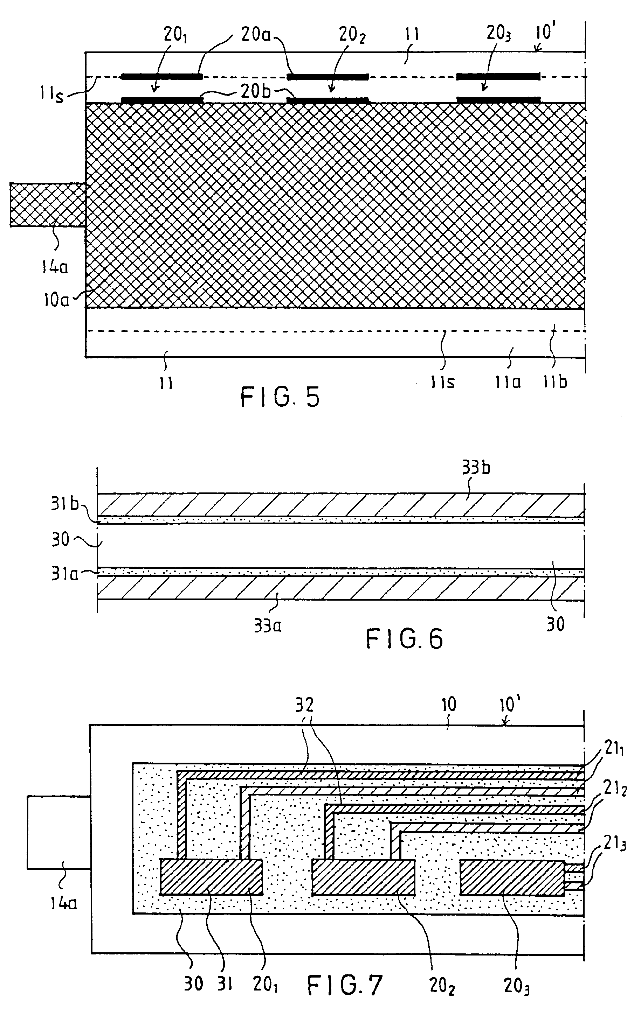

According to Fig. 5, the body part 10a of the roll 10, at whose ends there are axle journals 14a, is provided with an elastic coating 11, e.g., of polyurethane. The coating 11 is composed of two layers 11a and 11b, which are fixed one on top of the other, e.g., by means of an adhesive joint 11s. Onto the cylinder mantle of the roll body 10a, film detectors 20b have been glued, whose number is, in the way described above, n pcs. as uniformly spaced in the axial direction. Onto this, the lower layer 11b of the coating has been fixed. Onto the outer face 11b of the lower layer 11b, the second series of detectors 20a has been fixed, and onto that series the outer layer 11a of the coating 11, which has a smooth outer face 10′, which is placed against the web W in the nip N. The series of detectors 20a and 20b are interchangeable with one another. In practice, the alternative that is easier to control is to place the detectors in accordance with the series 20b, i.e. directly on the roll body.

Fig. 6 is a sectional view of an example of a preferred construction of a PVDF film detector 20. The detector comprises a PVDF film 30, to whose both sides metallizing patterns 31a,31b, e.g., of aluminium have been applied. On the metallizing patterns 31a,31b, there are layers of protective material 33a,33b, which are made, e.g., of "Kapton" (" " = trade mark). Fig. 6 is a sectional view taken, e.g., in a radial plane of the detector arrangement shown in Fig. 7, which is made of a PVDF film 30, which film is strip-shaped. The film strip 30 extends substantially across the entire axial length of the roll 10 mantle. The invention can also be accomplished so that each detector 20 is manufactured and cabled separately, i.e. out of individual pieces of PVDF film. The areas of the metallizing patterns 31 in the films form the active areas of the detectors 20₁...20ₙ, in which the compression forces are measured. The metallizing patterns 31 are connected with strip conductors 32, which are also composed of metallizations applied onto the film strip 30 in the way shown in Fig. 7. The cables 21₁...21ₙ that consist of strip conductors 32 are preferably placed so that they enter into the nip N at times different from the times of the active areas proper of the detectors. In this way, any interference signals arising from deformations in the cables 21 can be filtered off from the measurement signals.

The detectors 20 can be calibrated advantageously by to them applying a precisely known force and by examining the response obtained, which method is known as a so-called "impact hammer test". The maximal pressure pₘₐₓ in the press nip N is directly proportional to the peak voltage Vₘₐₓ of the pulse obtained from the detectors 20ᵢ (Fig. 4). The length of the nip in the machine direction lₒ is proportional to the pulse length, but not necessarily directly proportional, for the interdependence may be non-linear. Moreover, the shape of the pressure distribution p_{M} corresponds to the shape of the voltage pulse obtained from the detectors 20ᵢ. The transverse distribution of pressure P_{T} can be determined on the basis of the peak voltages V_{max i} of the series of pulses obtained from the different detectors 20ᵢ.

When the roll 10 is in the paper machine, in some roll positions it is difficult to use the impact hammer test because of lack of space. In such a case, it is possible to apply calibration by means of the PC 44, for which purpose a separate calibration program has been built-in and stored in the PC 44, by means of which program the detectors 20ᵢ are calibrated at regular intervals. The calibration program can be started either automatically at certain intervals or by the operator manually by the intermediate of the keyboard 45 of the PC 44. If there is sufficient space available around the roll 10, it is also possible to use the impact hammer test.

The display terminal 46 of the PC 44 shows the distribution p_{M} and p_{T} of the compression pressure graphically, and possibly also various auxiliary quantities and parameters calculated by the PC 44 as programmed, on the basis of said distributions, which auxiliary quantities and parameters are useful in the control and regulation of the papermaking process. The measurement signals may also be connected to the system of regulation of a paper machine or paper finishing machine, such as a calender or a reel-up to act as feedback signals for a closed regulation system.

In the following, the patent claims will be given, and the various details of the invention may show variation within the scope of the inventive idea defined in said claims and differ from what has been stated above for the sake of example only.

## Claims

1. Method for measurement of the nip force and/or of the nip pressure in a nip (N) formed by a revolving roll (10) or by a corresponding band employed in the manufacture of paper, in which method a series of measurement detectors (20₁,...20ₙ) is employed, whose detectors (20) are placed over a certain width in the transverse direction of the revolving roll (10) or of the band, preferably over the entire width (L₀) of the paper web (W), the measurement signals obtained from said detectors (20i) being passed to a measurement amplifier unit (29), whose connectors (24₁...24ₙ) are controlled so that, through the measurement amplifier unit (29), the signal of each measurement detector (20₁...20ₙ) is passed to a telemeter transmitter (27,28) placed in connection with the revolving roll (10) or equivalent, the telemetric messages transmitted by said telemeter transmitter (27,28) wirelessly being received by means of a telemeter receiver (41,42) placed outside the revolving roll (10) or equivalent, **characterized** in that the revolving roll (10) or equivalent is provided with a transmitter/receiver (27,28), that a transmitter receiver (41,42) placed outside the roll (10) or equivalent is placed at the proximity of said transmitter/receiver (27,28), said transmitter receiver (41,42) being connected (43) to a PC (44) or to a corresponding logic unit, and between said transmitter/receivers (27,28 and 41,42), a two-way wireless telemetric connection (T) is arranged, through which measurement data (M₁,M₂,M₃...Mₙ) are transferred from the roll (10) or equivalent to said PC (44) or equivalent, and from the latter unit, control data for the measurement system and possible calibration data are transferred to the measurement system placed in connection with the roll (10) or equivalent.

2. Method as claimed in claim 1, **characterized** in that the measurement detectors (20) that are used are PVDF film detectors (20), the signal of the volt level obtained from said detectors being passed through a switching unit (23) to a telemeter transmitter (27,28) and/or to a buffer memory (25b).

3. Method as claimed in claim 1 or 2, **characterized** in that the detectors (20) in the series of detectors (20₁...20ₙ) are calibrated by to them applying a known force, most appropriately by means of a so-called "impact hammer test", and by measuring the response obtained from the different detectors (20), in particular the height of the voltage pulse (Vₘₐₓ).

4. Method as claimed in claim 2, **characterized** in that the switching unit (23) of the measurement amplifier unit (29) on the revolving roll (10) is controlled by means of an external PC (44), the operator of the apparatus giving the command to start the measurement, determining the length of the measurement sequence and also determining which connector (24i) in the switching unit (23) is open/closed at each particular time.

5. Method as claimed in any of the claims 1 to 4, **characterized** in that, into a buffer memory (25b) placed in the measurement amplifier unit (29), from the measurement detectors (20i), measurement data and/or such data are collected by whose means the measurement detectors (20i) are calibrated by means of a calibration program stored in the PC (44) or equivalent.

6. Device for measurement of the nip force and/or of the nip pressure and of the distribution of same in a nip (N) formed by a revolving roll (10) or by a corresponding band employed in the manufacture of paper, which device comprises a series of detectors (20₁...20ₙ) placed in connection with the revolving roll (10) or the band, which measurement detectors (20) are placed, preferably as uniformly spaced, in the transverse direction of the roll (10) or the band, which device comprises a telemeter transmitter (27,28) fitted in connection with the revolving roll (10) or the band, to which transmitter the signals obtained from the different measurement detectors (20) can be passed, and which device comprises a telemeter receiver (41,42) fitted at the proximity of the telemeter transmitter (27,28) outside the roll (10) or equivalent, said receiver being fitted to receive the measurement signals transmitted by the telemeter transmitter (27,28) wirelessly, **characterized** in that the device comprises a transmitter/receiver (27,28) placed on the revolving roll (10) or equivalent and a transmitter/receiver (41,42) arranged outside the roll (10) or equivalent at its proximity and a PC (44) or a corresponding logic unit connected to said transmitter/receiver (41,42), and that a two-way telemetric connection (T) is arranged between said transmitter/receivers (27,28 and 41,42) so that control data for the measurement system can be transferred from said PC (44) or equivalent to the measurement amplifier unit (29) of the roll (10) and that measurement data (Mi) can be transferred from said detectors (20i) to said PC (44) or equivalent for use, for producing the output, and/or for further processing.

7. Device as claimed in claim 6, **characterized** in that, in the device, PVDF film detectors are used as the measurement detectors (20), which PVDF film detectors are fitted in connection with the face or the coating (11) of the revolving roll (10), and that there are about n = 3...20 pcs. of said film detectors in the transverse direction of the roll (10) or equivalent.

8. Device as claimed in claim 6 or 7, **characterized** in that the device comprises a charge amplifier (22), a switching unit (23) connected to same and a processor (25) connected to same and an A/D converter (25a) connected to said processor as well as, if necessary, also a buffer memory (25b) for measurement data, and that the measurement system is arranged to transfer measurement data (Mi), system control data, and possible calibration data over said telemetric connection (T) digitally and in two directions.

9. Device as claimed in any of the claims 6, 7 or 8, **characterized** in that the supply of power to the measurement amplifier unit (29) of the roll (10) or equivalent and to the transmitter/receiver (27,28) of said amplifier unit takes place by means of an apparatus based on electric induction, said apparatus comprising a magnet (50) placed outside the roll (10) or equivalent, an induction coil (51) fitted as facing said magnet in connection with the roll (10), a capacitance (52), and a voltage regulator (53).

10. Device as claimed in any of the claims 6 to 9, **characterized** in that the PC (44) of the measurement system is provided with a program that comprises a separate measurement branch and a calibration branch.

## Patentansprüche

1. Verfahren zur Messung der Kniff-Kraft und/oder des Kniff-Druckes in einem Kniff (N), der mittels einer sich drehenden Walze (10) oder mittels eines entsprechenden Bandes gebildet wird, die bei der Papierherstellung verwendet werden, wobei bei dem Verfahren eine Reihe von Meßdetektoren (20₁...20ₙ) angewendet wird, deren Detektoren (20) über eine bestimmte Breite in Querrichtung der sich drehenden Walze (10) oder des Bandes angeordnet sind, vorzugsweise über die gesamte Breite (L₀) der Papierbahn (W), wobei die von den Detektoren (20ᵢ) erhaltenen Meßsignale zu einer Meßverstärkereinheit (29) geleitet werden, deren Anschlüsse (24₁...24ₙ) derart gesteuert werden, daß durch die Meßverstärkereinheit (29) das Signal eines jeden Meßdetektors (20₁...20ₙ) zu einem in Verbindung mit der sich drehenden Walze (10) oder dergleichen angeordneten Telemetriesenders (27, 28) geleitet wird, wobei die mittels des Telemetriesenders (27, 28) drahtlos übermittelten Telemetrienachrichten mit Hilfe eines außerhalb der sich drehenden Walze (10) oder dergleichen angeordneten Telemetrieempfängers (41, 42) empfangen werden, dadurch gekennzeichnet, daß die sich drehende Walze (10) oder dergleichen mit einem Sender/Empfänger (27, 28) versehen ist, daß ein außerhalb der Walze (10) oder dergleichen angeordneter Sender/Empfänger (41, 42) in der näheren Umgebung des Senders/Empfängers (27, 28) angeordnet ist, wobei der Sender/Empfänger (41, 42) mit einem PC (44) oder einer entsprechenden logischen Einheit verbunden (43) ist, wobei sich zwischen den Sendern/Empfängern (27, 28 und 41, 42) eine drahtlose Zweiwege-Telemetrie-Verbindung (T) besteht, über welche Meßdaten (M₁, M₂, M₃...Mₙ) von der Walze (10) oder dergleichen zum PC (44) oder dergleichen transferiert werden, wobei von der letzteren Einheit Steuerdaten für das Meßsystem und mögliche Kalibierdaten zu dem in Verbindung mit der Walze (10) oder dergleichen angeordneten Meßsystem transferiert werden.

2. Verfahren nach Anspruch 1, dadurch gekennzeichnet, daß die verwendeten Meßdetektoren (20) PVDF-Filmdetektoren (20) sind, wobei das von den Detektoren erhaltene Signal des Spannungsniveaus durch eine Umschalteinheit (23) zu einem Telemetriesender (27, 28) und/oder zu einem Pufferspeicher (25b) geleitet wird.

3. Verfahren nach Anspruch 1 oder 2, dadurch gekennzeichnet, daß die Detektoren (20) in der Reihe von Detektoren (20₁...20ₙ) dadurch kalibriert werden, daß auf diese eine bekannte Kraft ausgeübt wird, und zwar geeignetsterweise mit Hilfe eines sogenannten "Stoßhammerversuchs", und daß das von den unterschiedlichen Detektoren (20) erhaltene Ansprechen, insbesondere die Höhe des Spannungspulses (Vₘₐₓ), gemessen wird.

4. Verfahren nach Anspruch 2, dadurch gekennzeichnet, daß die Umschalteinheit (23) der Meßverstärkereinheit (29) an der sich drehenden Walze (10) mit Hilfe eines externen PC (44) gesteuert wird, wobei der Anwender der Vorrichtung, der den Befehl zum Start der Messung gibt, die Länge der Meßsequenz bestimmt und zudem bestimmt, welcher Anschluß (24i) in der Umschalteinheit (23) zu jedem bestimmten Zeitpunkt offen/geschlossen ist.

5. Verfahren nach einem der Ansprüche 1 bis 4, dadurch gekennzeichnet, daß von den Meßdetektoren (20i) in einem in der Meßverstärkereinheit (29) angeordneten Pufferspeicher (25b) Meßdaten und/oder solche Daten gesammelt werden, mit deren Hilfe die Meßdetektoren (20i) mit Hilfe eines in dem PC (44) oder dergleichen gespeicherten Kalibrierprogrammes kalibriert werden.

6. Vorrichtung zur Messung der Kniff-Kraft und/oder des Kniff-Druckes und ihrer Verteilung in einem Kniff (N), der mittels einer sich drehenden Walze (10) oder eines entsprechenden Bandes gebildet wird, die bei der Papierherstellung verwendet werden, wobei die Vorrichtung eine Reihe von Detektoren (20₁...20ₙ) aufweist, die in Verbindung mit der sich drehenden Walze (10) oder dem Band angeordnet sind, wobei die Meßdetektoren (20) vorzugsweise gleichmäßig beabstandet in Querrichtung der Walze (10) oder des Bandes angeordnet sind, wobei die Vorrichtung einen Telemetriesender (27, 28) aufweist, der in Verbindung mit der sich drehenden Walze (10) oder des Bandes angebracht ist und die von unterschiedlichen Meßdetektoren (20) erhaltenen Signale zu dem Sender geleitet werden können, und wobei die Vorrichtung einen Telemetrieempfänger (41, 42) aufweist, der in der näheren Umgebung des Telemetriesenders (27, 28) außerhalb der Walze (10) oder dergleichen angebracht ist, wobei der Empfänger angebracht ist, um die mittels des Telemetriesenders (27, 28) drahtlos übermittelten Meßsignale zu empfangen, dadurch gekennzeichnet, daß die Vorrichtung einen an der sich drehenden Walze (10) oder dergleichen befindlichen Sender/Empfänger (27, 28) hat und einen Sender/Empfänger (41, 42) hat, der außerhalb der Walze (10) oder dergleichen in seiner näheren Umgebung angeordnet ist, und einen PC (44) oder eine entsprechende logische Einheit hat, die mit dem Sender/Empfänger (41, 42) verbunden ist, und daß zwischen den Sendern/Empfängern (27, 28 und 41, 42) eine Zweiwege-Telemetrie-Verbindung (T) angeordnet ist, so daß von dem PC (44) oder dergleichen Steuerdaten für das Meßsystem zur Meßverstärkereinheit (29) der Walze (10) transferierbar sind, und daß Meßdaten (Mi) von den Detektoren (20i) zu dem PC (44) oder dergleichen transferierbar sind, und zwar für die Anwendung, für die Erzeugung der Ausgabe und/oder für die weitere Bearbeitung.

7. Vorrichtung nach Anspruch 6, dadurch gekennzeichnet, daß in der Vorrichtung als Meßdetektoren (20) PVDF-Filmdetektoren verwendet werden, wobei die PVDF-Filmdetektoren in Verbindung mit der Fläche oder der Beschichtung (11) der sich drehenden Walze (10) angebracht sind, und daß etwa N = 3...20 Stücke der Filmdetektoren in Querrichtung der Walze (10) oder dergleichen vorhanden sind.

8. Vorrichtung nach Anspruch 6 oder 7, dadurch gekennzeichnet, daß die Vorrichtung einen Ladeverstärker (22), eine damit verbundene Umschalteinheit (23) und einen damit verbundenen Prozessor (25) und einen mit dem Prozessor verbundenen A/D-Wandler (25a) aufweist sowie, falls nötig, zudem einen Pufferspeicher (25b) für Meßdaten aufweist, und daß das Meßsystem angeordnet ist, um Meßdaten (Mi), Systemsteuerdaten und mögliche Kalibrierdaten über die Telemetrieverbindung (T) digital und in zwei Richtungen zu transferieren.

9. Vorrichtung nach einem der Ansprüche 6, 7 oder 8, dadurch gekennzeichnet, daß die Energiezufuhr zur Meßverstärkereinheit (29) der Walze (10) oder dergleichen und zu dem Sender/Empfänger (27, 28) der Verstärkereinheit mit Hilfe eines Apparates stattfindet, und zwar basierend auf elektrischer Induktion, wobei der Apparat einen außerhalb der Walze (10) oder dergleichen angeordneten Magneten (50), eine Induktionsspule (51), die dem Magneten in Verbindung mit der Walze (10) zugewandt angebracht ist, eine Kapazität (52) und eine Spannungsregeleinrichtung (53) aufweist.

10. Vorrichtung nach einem der Ansprüche 6 bis 9, dadurch gekennzeichnet, daß der PC (44) des Meßsystems mit einem Programm versehen ist, das einen separaten Meßzweig und Kalibrierzweig aufweist.

## Revendications

1. Procédé pour mesurer la force de pincement et/ou la pression de pincement dans un interstice (N) formé par un rouleau tournant (10) ou par une bande correspondante employée pour la fabrication de papier, procédé dans lequel est utilisée une série de détecteurs de mesure (20₁ ... 20ₙ), dont les détecteurs (20) sont placés sur une certaine largeur dans la direction transversale du rouleau tournant (10) ou de la bande, de préférence sur la totalité de la largeur (L₀) de la nappe de papier (W), les signaux de mesure obtenus desdits détecteurs (20i) étant appliqués à une unité amplificatrice de mesure (29), dont les connecteurs (24₁ ... 24ₙ) sont commandés de manière que le signal de chaque détecteur de mesure (20₁ ... 20ₙ) soit appliqué par l'intermédiaire de l'unité amplificatrice de mesure (29) à un émetteur télémétrique (27, 28) placé en liaison avec le rouleau tournant (10) ou équivalent, les messages télémétriques transmis sans fil par ledit émetteur télémétrique (27, 28) étant reçus au moyen d'un récepteur télémétrique (41, 42) placé à l'extérieur du rouleau tournant (10) ou équivalent, caractérisé en ce que le tournant (10) ou équivalent est muni d'un émetteur/récepteur (27**,**28), en ce qu'un émetteur récepteur (41, 42) placé à l'extérieur du rouleau (10) ou équivalent est placé à proximité dudit émetteur/récepteur (27, 28), ledit émetteur récepteur (41, 42) étant relié (43) à un PC (44) ou à une unité logique correspondante, et entre lesdits émetteurs/récepteurs (27, 28 et 41, 42) est disposée une connexion télémétrique sans fil à deux voies (T) par laquelle les données de mesure (M₁, M₂, M₃ ... Mₙ) sont transférées du rouleau (10) ou équivalent audit PC (44) ou équivalent, et les données de commande du système de mesure et les données de calibrage possibles sont transférées de cette dernière unité au système de mesure placé en liaison avec le rouleau (10) ou équivalent.

2. Procédé selon la revendication 1, caractérisé en ce que les détecteurs de mesure (20) qui sont utilisés sont des détecteurs en film de FPVD (20), le signal du niveau de tension obtenu desdits détecteurs étant appliqué par l'intermédiaire d'une unité de commutation (23) à un émetteur télémétrique (27, 28) et/ou à une mémoire tampon (25b).

3. Procédé selon la revendication 1 ou 2, caractérisé en ce que les détecteurs (20) de la série de détecteurs (20₁ ... 20ₙ) sont calibrés en leur appliquant une force connue, le plus avantageusement au moyen du test dit "à impact par marteau", et en mesurant la réponse obtenue des différents détecteurs (20), en particulier la hauteur de l'impulsion de tension (Vₘₐₓ).

4. Procédé selon la revendication 2, caractérisé en ce que l'unité de commutation (23) de l'unité amplificatrice de mesure (29) du rouleau tournant (10) est commandée au moyen d'un PC externe (44), l'opérateur du dispositif fournissant la commande pour démarrer la mesure, déterminant la longueur de la séquence de mesure, et déterminant également quel est le connecteur (24i) de l'unité de commutation (23) qui est ouvert/fermé à chaque instant particulier.

5. Procédé selon l'une quelconque des revendications 1 à 4, caractérisé en ce que les données de mesure et/ou des données de ce type provenant des détecteurs de mesure (20i) sont recueillies dans une mémoire tampon (25b) placée dans l'unité amplificatrice de mesure (29) , données au moyen desquelles les détecteurs de mesure (20i) sont calibrés au moyen d'un programme de calibrage mis en mémoire dans le PC (44) ou équivalent.

6. Dispositif pour mesurer la force de pincement et/ou la pression de pincement et la distribution de cette pression dans un interstice (N) formé par un rouleau tournant (10) ou par une bande correspondante employée dans la fabrication de papier, lequel dispositif comprend une série de détecteurs (20₁ ... 20ₙ) placés en liaison avec le rouleau tournant (10) ou la bande, lesquels détecteurs de mesure (20) sont placés, de préférence en étant espacés de façon uniforme, dans la direction transversale du rouleau (10) ou de la bande, lequel dispositif comprend un émetteur télémétrique (27, 28) monté en liaison avec le rouleau tournant (10) ou la bande, auquel émetteur les signaux obtenus des différents détecteurs de mesure (20) peuvent être appliqués, lequel dispositif comprend un récepteur télémétrique (41, 42) monté à proximité de l'émetteur télémétrique (27, 28) à l'extérieur du rouleau (10) ou équivalent, ledit récepteur étant monté de façon à recevoir les signaux de mesure transmis sans fil par l'émetteur télémétrique (27, 28), caractérisé en ce que le dispositif comprend un émetteur/récepteur (27, 28) placé sur le rouleau (10) ou équivalent et un émetteur/récepteur (41, 42) monté à l'extérieur du rouleau (10) ou équivalent à proximité de celui-ci, et un PC (44) ou une unité logique correspondante reliée audit émetteur/récepteur (41, 42), et en ce qu'une liaison télémétrique à deux voies (T) est disposée entre lesdits émetteurs/récepteurs (27, 28 et 41, 42) de manière que les données de commande destinées au système de mesure puissent être transférées dudit PC (44) ou équivalent à l'unité amplificatrice de mesure (29) du rouleau (10) et que les données de mesure (Mi) puissent être transférées desdits détecteurs (20i) audit PC (44) ou équivalent pour être utilisées pour produire la sortie et/ou en vue de la poursuite de leur traitement.

7. Dispositif selon la revendication 6, caractérisé en ce que, dans le dispositif, sont utilisés des détecteurs en film FPVD constituant les détecteurs de mesure (20), lesquels détecteurs en film FPVD sont montés en étant reliés à la face ou au revêtement (11) du rouleau tournant (10), et en ce qu'il y a environ n = 3 ... 20 desdits éléments détecteurs en film dans la direction transversale du rouleau (10) ou équivalent.

8. Dispositif selon la revendication 6 ou 7, caractérisé en ce qu'il comprend un amplificateur de charge (22), une unité de commutation (23) reliée à ce dernier , un processeur (25) relié à cette dernière et un convertisseur A/N (25a)relié audit processeur de même qu'également, si nécessaire, une mémoire tampon (25b) pour les données de mesure, et en ce que le système de mesure est aménagé pour transférer les données de mesure (Mi), les données de commande du système et d'éventuelles données de calibrage numériquement par ladite connexion télémétrique (T) et dans deux directions.

9. Dispositif selon l'une quelconque des revendications 6, 7 ou 8, caractérisé en ce que l'alimentation en puissance de l'unité amplificatrice de mesure (29) du rouleau (10) ou équivalent et de l'émetteur/récepteur (27, 28) de ladite unité amplificatrice a lieu au moyen d'un dispositif basé sur une induction électrique, ledit dispositif comprenant un aimant (50) placé à l'extérieur du rouleau (10) ou équivalent, une bobine d'induction (51) disposée face audit aimant et en liaison avec ledit rouleau (10), une capacité (52) et un régulateur de tension (53).

10. Dispositif selon l'une quelconque des revendications 6 à 9, caractérisé en ce que le PC (44) du système de mesure est muni d'un programme qui comprend une branche de mesure et une branche de calibrage séparées.
